# EUROPEAN PATENT APPLICATION

(11) **EP 1 693 779 A1**
(43) Date of publication of application: **23.08.2006**
(21) Application number: 05024526.5
(22) Date of filing: 10.11.2005
(51) Int. Cl.: G06K 7/10, G06K 7/00

(54) **Apparatus for stamp-type barcode reader**

(30) Priority: 16.02.2005 KR 2005004179; 19.04.2005 KR 2005010865
(71) Applicant: DATA SQUARE TECHNOLOGY CO., LTD., Gangnam-gu Seoul 135-839 (KR)
(72) Inventor: Yu, Gyu-Young, Gangnam-gu, Seoul 135-509 (KR)
(74) Representative: Verscht, Thomas Kurt Albert

(57) **Abstract**

Disclosed herein is an apparatus for stamp-type barcode reading that includes a camera for capturing a bar code and for transmitting captured bar code image information to a bar code interpretation terminal on which bar code interpretation software is installed; and a camera stand for supporting the camera so that a capture direction of the camera is oriented downward and a camera focus is located on the bar code, the camera stand having sides made of transparent material so that natural light can enter into the camera stand. As a result, the apparatus for stamp-type barcode reading precisely reads bar codes when a user merely places the apparatus for stamp-type barcode reading on paper on which the bar code is printed as simply as putting a stamp thereon. Natural light can be used by turning off an illumination device when the surrounding environment is brightly lit. The camera can be used as a general purpose camera when separated from a camera stand because the camera stand is detachable from the camera.

## Description

### [Technical Field]

The present invention relates, in general, to an apparatus for stamp type barcode reader and, more particularly, to an apparatus for stamp type barcode reader which precisely reads a bar code when a user merely places the apparatus for stamp type barcode reader as simply as putting a stamp on paper on which the bar code is printed, which uses natural light, thereby not requiring a separate illumination device, and which may be used as a general camera when separated from a camera stand because the camera stand is detachable from the camera.

### [Background Art]

Generally, a bar code is a sign or a sign system that represents information using the arrangement pattern of black bars and white bars having various widths.

It is similar to the way Morse code represents information using the arrangement of dots (.) and dashes (-). Representing the information using the bar code and interpreting the represented information are possible using bar code equipment, so that the bar code can be regarded as a machine language.

A bar or space is converted into one or a plurality of binary bits (0 and 1) depending on its width, and ASCII characters can be represented using combinations thereof.

There are advantages in that the bar code removes inconvenience caused by manual work, such as direct key punching by humans, and a bar code scanner directly inputs information, thereby simplifying data input and increasing processing speed. Errors are generated depending on a corresponding human's proficiency when the human manually inputs using a keyboard, whereas bar codes are devised such that the bar code's characters can be automatically checked, and errors are rarely generated because input precision is high.

Generally, the bar code consists of one-dimensional straight type bars as described above, but nowadays two-dimensional bar code, in which straight type bars are arranged vertically and horizontally and which can store a lot of information, has been widely developed.

The two-dimensional bar code is an information storage medium typically formed by the arrangement of many dots in a square plane, and is different from the one-dimensional bar-type bar code.

Generally, in order to interpret the information stored in the bar code, small optical spots pass over and are reflected by the bars and spaces through a scanner, so that differences between the amounts of light reflected from the black bar portions and white bar portions (space bars) of the bar code are converted into electrical signals by the optical detector of the scanner.

Meanwhile, the one-dimensional bar code is advantageous in that the one-dimensional bar code does not affect data input even if the uniform height thereof is damaged up to 95%, so that a user can easily use materials and all current printing methods can be used. However, there is no solution for loss caused by damage because the amount of stored data is small. In contrast, the two-dimensional bar code is becoming important because the amount of stored data is large even if portions thereof are damaged to a certain degree, so that it can store compensation information for those portions. However there is a problem in that an accurate bar code reader is required to use the two-dimensional bar code in practice.

A two-dimensional bar code reader generally interprets information using general camera technology to attain such accuracy.

The two-dimensional bar code reader and problems with the prior art are described with reference to the drawings.

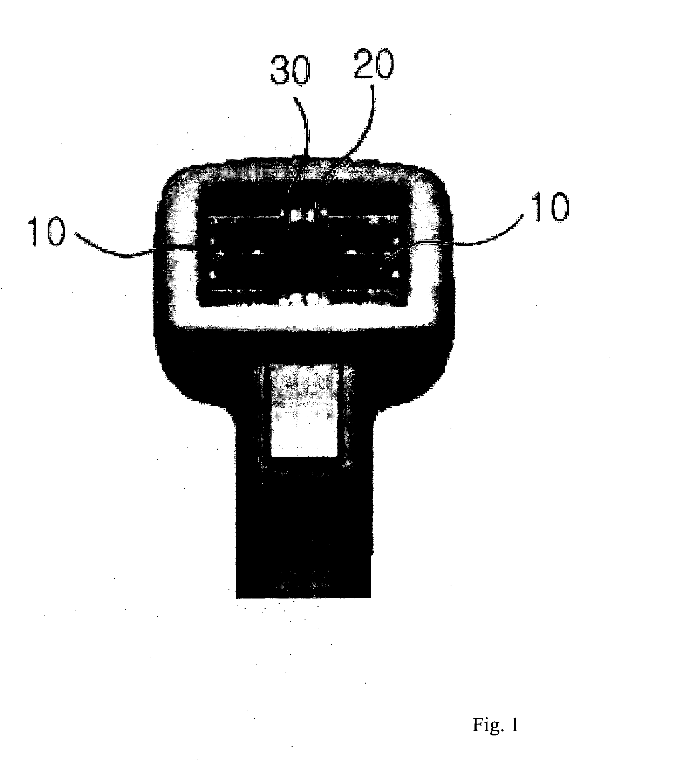

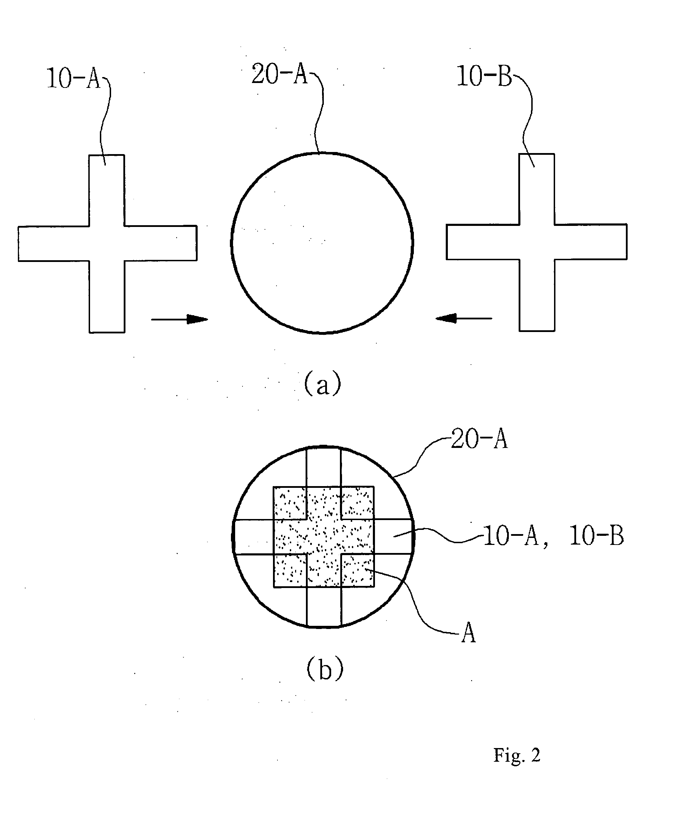

FIG. 1 is a photograph illustrating a conventional two-dimensional bar code reader. FIG. 2 is a diagram illustrating a user guide of the conventional two-dimensional bar code reader. The two-dimensional bar code reader of FIG. 1 is only an example of many conventional two-dimensional bar code readers and has the same limitations as do others. As shown in FIG. 1, the conventional two-dimensional bar code reader includes cross emission devices 10 for focal distance adjustment formed at both ends, a view angle position projection device 20, and a camera 30.

In the use of the above-described two-dimensional bar code reader, as shown in FIG. 2(a), a focal distance is made known in such a way that cross hairs are projected from the two cross emission devices 10 for focal distance adjustment formed at both ends thereof, and the two cross hairs overlap at a distance identical to the focal distance, position adjustment is performed so that the two-dimensional bar code 'A' is located in an view angle position screen 20-A which is projected from the view angle position projection device, and image information is then acquired.

That is, since, in the two-dimensional bar code, an accurate image is required, unlike the one-dimensional bar code, the accurate adjustment of the focal distance and the view angle is essential. Furthermore, there is a problem in that light must be projected onto an object for a camera to acquire an image as described above.

As a result, in the two-dimensional bar code reader whose camera must use natural light, the above-described method acquires an image at a distance from the bar code corresponding to the focal distance so as to read the bar code, so that a reading error rate become high due to the shaking of a user's hands, inaccurate distance adjustment and position adjustment, thereby requiring proficiency in use by a user.

### [Disclosure]

### [Technical Problem]

Accordingly, the present invention has been made keeping in mind the above problems occurring in the prior art, and an object of the present invention is to provide an apparatus for stamp type barcode reader, which precisely reads bar code when a user merely places the apparatus for stamp type barcode reader as simply as putting a stamp on paper on which the bar code is printed, which can use natural light by turning off an illumination device when the surrounding environment is brightly lit, and which can be used as a general camera when separated from a camera stand because the camera stand is detachable from the camera.

Another object of the present invention is to provide an apparatus for stamp type barcode reader which has a Radio Frequency IDentification (RFID) reader which can read the information of an RFID tag, thereby reading the bar code and the RFID tag at the same time.

### [Technical Solution]

In order to accomplish the above objects, the apparatus for stamp type barcode reader of the present invention includes a camera for capturing a bar code and transmitting captured bar code image information to a bar code interpretation terminal on which bar code interpretation software is installed; and a camera stand for supporting the camera so that a capture direction of the camera is oriented downward and a camera focus is located on the bar code, the camera stand having sides made of transparent material so that natural light can enter into the camera stand.

Preferably, the bar code interpretation terminal can interpret one-dimensional bar code image information or two-dimensional bar code image information.

Preferably, the camera is equipped with an illumination device and an on/off operation unit of the illumination device.

Preferably, the illumination device is mounted so that an illumination direction thereof is oriented downward, the illumination device being composed of LEDs (Light Emitting Diode).

Preferably, the camera internally or externally comprises an RFID reader which receives tag information from an RFID tag, and transmits the tag information to the bar code interpretation terminal.

Preferably, the camera stand is detachable from the camera.

Preferably, it is preferable that attachment guide lines are respectively indicated on the camera and the camera stand.

Preferably, the camera stand being formed so that a shape of a plane thereof, which contacts paper on which the bar code is printed, coincides with a capture area of the camera.

Preferably, a bar code position guide line which represents the capture area of the camera can be indicated on the camera stand.

### [Advantageous Effects]

In accordance with the present invention, the apparatus for stamp type barcode reader, which precisely reads bar code when a user merely places the apparatus for stamp type barcode reader as simply as putting a stamp on paper on which the bar code is printed, which can use natural light by turning off an illumination device when the surrounding environment is brightly lit, and which can be used as a general camera when separated from a camera stand because the camera stand is detachable from the camera, can be provided.

Furthermore, in accordance with the present invention, an apparatus for stamp type barcode reader, having an RFID reader that can read the information of a RFID tag thereby reading the bar code and the RFID tag at the same time, can be provided.

### [Description of Drawings]

FIG. 1 is a photograph of a conventional two-dimensional bar code reader;
FIG. 2 is a diagram illustrating the usage guide of the conventional two-dimensional bar code reader;
FIG. 3 is a diagram illustrating an apparatus for stamp type barcode reader according to a first embodiment of the present invention;
FIG. 4 is a view of the camera of the apparatus for stamp type barcode reader of the present invention when viewed from below;
FIG. 5 is a diagram illustrating a separated state of the camera and camera stand of the apparatus for stamp type barcode reader according to the first embodiment of the present invention; and
FIG. 6 is a diagram illustrating an apparatus for stamp type barcode reader according to a second embodiment of the present invention.

### [Best Mode]

The preferred embodiment of the present invention will be described in detail below with reference to the accompanying drawings.

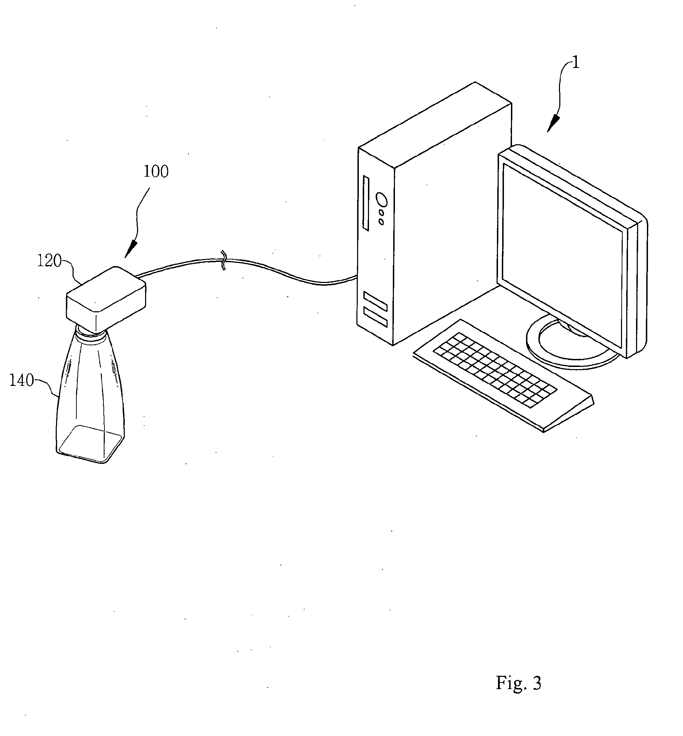

FIG. 3 is a diagram illustrating an apparatus for stamp type barcode reader according to a first embodiment of the present invention.

Referring to FIG. 3, the apparatus for stamp type barcode reader 100 according to the first embodiment of the present invention is a bar code reader using a camera and includes a camera 120 and a camera stand 140.

The camera 120 transmits the information of a captured bar code image, which is obtained by capturing a bar code, to a bar code interpretation terminal on which bar code interpretation software is installed. The bar code interpretation terminal 1 can interpret one-dimensional bar code image information or two-dimensional bar code image information.

The camera stand 140 supports the camera 120 so that the capture direction of the camera is oriented downward and the camera is focused on the bar code. The sides of the camera stand 140 are made of transparent material so that natural light can enter into the camera stand 140.

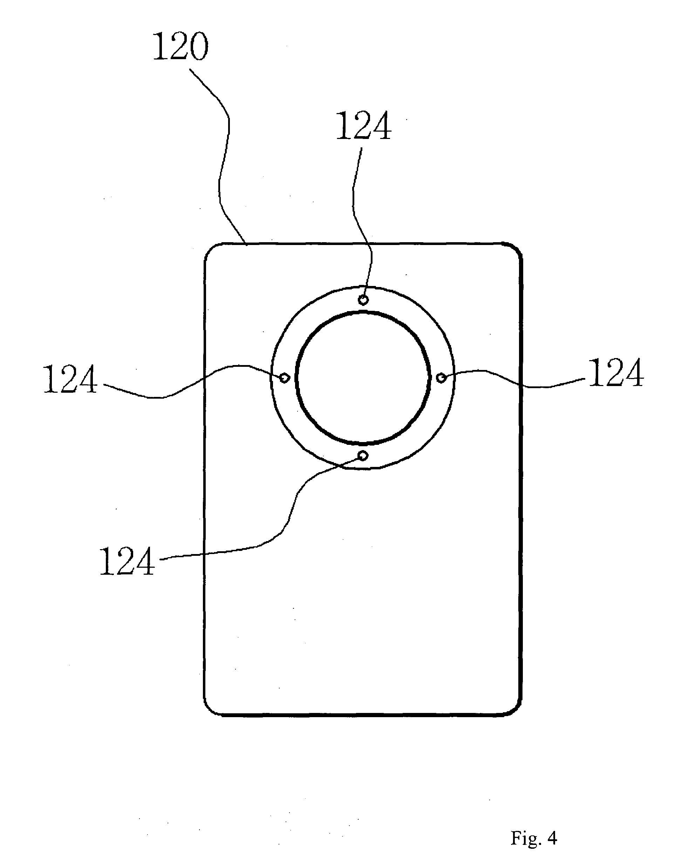

FIG. 4 is a view of the camera 120 of the apparatus for stamp type barcode reader 100 of the present invention when viewed from below.

Referring to FIG. 4, illumination devices 124, the lighting direction of which is oriented downward and which are composed of LEDs (Light Emitting Diode), and an on/off operation unit (not shown), which can control the on/off operation of the illumination devices 124, are mounted on the camera 120.

When the surrounding environment is brightly lit, natural light is used by turning off the illumination devices 124; and when the surrounding environment is dark, illumination light is used by turning on the illumination devices 124.

When the illumination devices 124 are turned on, it is preferred that the illumination devices be mounted symmetrically so that a shadow attributable to the lighting is not generated on the bar code to be captured. The reason for this is that, when the shadow is generated, the shadow image mixes with the bar code image information, so that errors may be generated upon the interpretation of the bar code.

Meanwhile, an RFID read chip (not shown), which receives tag information from an RFID tag, is installed in the camera 120, so that the tag information, which is read by the RFID read chip, is transmitted to the bar code interpretation terminal 1.

Furthermore, the camera stand 140 is detachable from the camera 120 and is formed so that the shape of the plane thereof that contacts the paper on which the bar code is printed coincides with the capture area of the camera 120.

The apparatus for stamp type barcode reader 100 according to the first embodiment of the present invention is mainly used as a two-dimensional bar code reader, but may also be used as a one-dimensional bar code reader.

Generally, the bar code interpretation terminal 1 displays the bar code image falling within the capture area of the camera 120. When the bar code normally enters the capture area, the bar code interpretation terminal 1 receives the bar code image information from the camera and then interprets the bar code using bar code interpretation software.

In accordance with the conventional technology, due to the limitations of the two-dimensional bar code reader, a view angle screen is projected in order to adjust the view angle position of the camera using the naked eyes, cross hairs for focus adjustment are projected in order to enable separation of the camera from the bar code by the focal distance, and a user manually adjusts the focus and the view angle, presses the user's hand at the focal distance position, and then recognizes the bar code image information.

As a result, the user must hold the bar code reader until the bar code is completely recognized.

In accordance with the present invention, when the user merely places the apparatus for stamp type barcode reader 100 according to the first embodiment of the present invention as simply as putting a stamp on paper on which the bar code is printed so that the bar code is within the camera stand 140, the bar code enters the capture area of the camera 120, thereby eliminating the need to adjust the position of the bar code while viewing the bar code displayed on the bar code interpretation terminal 1 and easily and precisely interpreting the two-dimensional bar code because the focus of the camera 120 is stably focused on the bar code.

Furthermore, in accordance with the present invention, the camera stand is formed of transparent material, so that a user can check whether the bar code is in the camera stand 140 using his/her own eyes and can adjust the position thereof, and enables natural light or ambient light to enter from the sides of the camera stand 140 so as to play the role of illumination source which enables the capture of the image from the camera 120 of the apparatus for barcode reader.

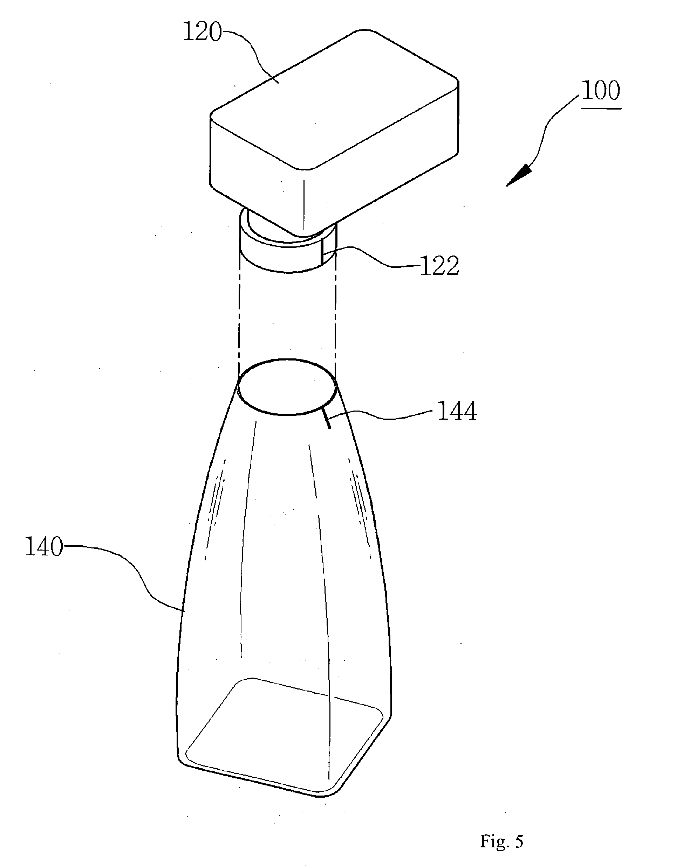

FIG. 5 is a diagram illustrating the separated state of the camera 120 and camera stand 140 of the apparatus for stamp type barcode reader 100 according to the first embodiment of the present invention.

Referring to FIGS. 3 and 5, the camera stand is formed to be detachable from the camera 120, so that, when the camera stand 140 is separated from the camera, the camera 120 can be used as a general camera, and when the camera stand 140 is attached to the camera, the camera 120 can be used as the apparatus for barcode reader.

When attaching the camera stand 140 to the camera 120, the user attaches the camera stand 140 to the camera 120 so that the attachment guide line 144 indicated on the camera stand 140 is identical to the attachment guide line 122 indicated on the camera 120.

The reason why that the attachment guide lines 122 and 144 are respectively indicated on the camera 120 and the camera stand 140 is that mismatch with the capture area of the camera 120 occurs when the camera stand 140, which is formed to cause the shape of the plane thereof contacting the paper on which the bar code is printed to coincide with the capture area of the camera 120, is mismatched with the attachment orientation to the camera 120, .

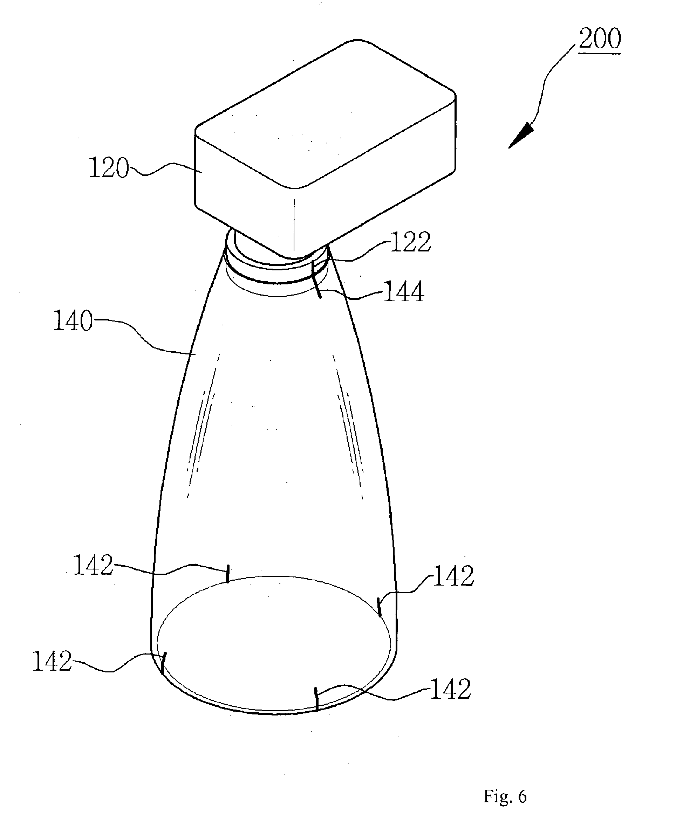

FIG. 6 is a diagram illustrating an apparatus for stamp type barcode reader 200 according to a second embodiment of the present invention.

Referring to FIG. 6, the difference between the apparatus for stamp type barcode reader 200 according to the second embodiment of the present invention and the apparatus for stamp type barcode reader 200 according to the first embodiment of the present invention resides in the shape of the camera stand 140.

The apparatus for stamp type barcode reader 200 according to the second embodiment of the present invention is formed in a conical shape so as to simplify the manufacturing processes, but a bar code position guide line 142, which presents the capture area of the camera 120, is provided.

Therefore, when the user installs the apparatus for stamp type barcode reader 200 according to the second embodiment of the present invention so that the bar code is within the bar code position guide line 142 indicated on the camera stand 140, the bar code is located within the capture area of the camera 120, thereby easily and precisely interpreting the two-dimensional bar code, as in the first embodiment.

Furthermore, the attachment guide lines 122 and 144 are respectively indicated on the camera 120 and the camera stand 140. When the user attaches the camera stand 140 to the camera 120, the user causes the attachment guide line 144 indicated on the camera stand 140 to coincide with the attachment guide line 122 indicated on the camera 120.

### [Industrial Applicability]

The descriptions of the embodiments and the depictions in the drawings are just examples of preferred embodiments of the present invention, and do not represent the entire scope and spirit of the invention. As a result, it is apparent that various equivalents and modifications that may replace the embodiments may exist.

## Claims

1. An apparatus for barcode reader using a camera, comprising:
a camera for capturing a bar code and transmitting captured bar code image information to a bar code interpretation terminal on which bar code interpretation software is installed; and
a camera stand for supporting the camera so that a capture direction of the camera is oriented downward and a camera focus is located on the bar code, the camera stand having sides made of transparent material so that natural light can enter into the camera stand.

2. The apparatus for barcode reader according to claim 1, wherein the bar code interpretation terminal can interpret one-dimensional bar code image information or two-dimensional bar code image information.

3. The apparatus for barcode reader according to claim 1 or 2, wherein the camera is equipped with an illumination device and an on/off operation unit of the illumination device.

4. The apparatus for barcode reader according to claim 3, wherein the illumination device is mounted so that an illumination direction thereof is oriented downward, the illumination device being composed of Light Emitting Diodes (LEDs).

5. The apparatus for barcode reader according to any of the preceding claims, wherein the camera internally or externally comprises a Radio Frequency IDentification (RFID) reader for receiving tag information from an RFID tag, and transmits the tag information to the bar code interpretation terminal.

6. The apparatus for barcode reader according to any of the preceding claims, wherein the camera stand is detachable from the camera.

7. The apparatus for barcode reader according to claim 6, wherein attachment guide lines are respectively indicated on the camera and the camera stand.

8. The apparatus for barcode reader according to any of the preceding claims, wherein the camera stand being formed such that a shape of a plane of which contacts paper on which the bar code is printed coincides with a capture area of the camera.

9. The apparatus for barcode reader according to any of the preceding claims; wherein a bar code position guide line which represents the capture area of the camera is indicated on the camera stand.
